# EUROPÄISCHE PATENTSCHRIFT

(11) **EP 3 200 912 B1**
(45) Veröffentlichungstag und Bekanntmachung des Hinweises auf die Patenterteilung: **28.11.2018**
(21) Anmeldenummer: 15791483.9
(22) Anmeldetag: 11.09.2015
(51) Int. Cl.: B01J 19/00, F28F 13/00, G21B 1/13

(54) **VORRICHTUNG ZUM GEREGELTEN WÄRMEÜBERGANG AUF UND VON EINEM BAUTEIL**
DEVICE FOR CONTROLLED HEAT TRANSFER TO AND FROM A COMPONENT
DISPOSITIF DE TRANSFERT DE CHALEUR RÉGULÉ DEPUIS ET VERS UN COMPOSANT

(30) Priorität: 29.09.2014 DE 102014014070
(43) Veröffentlichungstag der Anmeldung: 09.08.2017
(73) Patentinhaber: Forschungszentrum Jülich GmbH, 52425 Jülich (DE)
(72) Erfinder: SCHEIBL, Lothar, 52064 Aachen (DE); SCHRUFF, Joachim, 52076 Aachen (DE)
(86) Internationale Anmeldenummer: PCT/DE2015/000453
(87) Internationale Veröffentlichungsnummer: WO 2016/050230

(56) Entgegenhaltungen:
- EP-A1- 0 542 534
- EP-A1- 0 571 863
- DE-A1-102010 011 020
- US-A- 4 696 781
- US-A1- 2002 086 179

## Beschreibung

Die Erfindung betrifft im Allgemeinen eine Vorrichtung zur Temperierung, mit welchem daran angekoppelte Bauteile auf Temperaturen bis zu 1500 °C aufgeheizt, bei dieser Temperatur gehalten oder auch wieder auf Raumtemperatur gekühlt werden können, und im Besonderen um eine Vorrichtung, bei der der Wärmeübergang auf und von einem Bauteil variabel gestaltet werden kann.

### Stand der Technik

Im Zuge der Erforschung von Materialien, die bei ihrem Einsatz hohen thermischen Ansprüchen genügen müssen, entsteht die Notwendigkeit, diese Objekte unter adäquaten Bedingungen im Vorfeld zu testen. Hieraus ergibt sich die Forderung nach einer Einrichtung, die in der Lage ist, ein Objekt oder eine Probe auf einer konstanten Temperatur zwischen Raumtemperatur und etwa 1500 °C zu halten.

Im Zuge der Forschung zur Plasma-Wand-Wechselwirkung (PWW) bei Fusionsreaktoren werden beispielsweise verschiedene Werkstoffe hinsichtlich ihres Verhaltens bei der Belastung durch ein Plasma untersucht. Maßgeblich handelt es sich hierbei um ein Wasserstoff- bzw. Deuteriumplasma, das in der Regel frontal auf die Werkstoffprobe geführt wird und so u. a. zu einem Wasserstoffinventar im Material führt. Dessen Quantität wird in verschiedenen Analyseverfahren durch Freisetzen des Inventars festgestellt. Hierfür hat die Probe idealerweise eine frei wählbare, aber konstante Temperatur, mit oder ohne Plasmabeaufschlagung oder während der Analyse. Durch Anlegen eines elektrischen Feldes zwischen Probe und Plasmaquelle (Biasing) kann die lonengeschwindigkeit des Plasmas und damit die Aufschlagenergie und Eindringtiefe variiert werden. Die angestrebte maximale Probentemperatur leitet sich aus den zu erwartenden Wandtemperaturen eines Fusionsreaktors ab.

Insbesondere ergibt sich hieraus die Forderung nach einer Einrichtung, die in der Lage ist, einen Werkstoff bzw. eine Probe des Werkstoffes gegebenenfalls auch im Vakuum auf eine Temperatur oberhalb von 1500 °C zu erhitzen und zu halten.

Generell stellt sich bei aufeinander montierten und flächig kontaktierten Bauteilen das Problem des Wärmeüberganges, da bei einer direkten festen Bauteilkopplung in der Regel nicht von einem durchgängigen Flächenkontakt ausgegangen werden kann. Vielmehr werden verschiedene, nicht vermeidbare kleine Erhebungen die Flächen auf Abstand halten und es wird sich ein berührungsloser Raum zwischen den beiden Oberflächen einstellen. Bezogen auf die wenigen wirklichen Kontaktflächen hat dieser Zwischenraum eine nicht unerhebliche Ausdehnung, die hinsichtlich des Wärmeüberganges deutlich ungünstig ist.

Dieses Problem stellt sich verstärkt bei einer Koppelstelle ein, wenn die zu kontaktierenden Bauteile in Form von Testobjekten wiederholt gewechselt werden. Die bislang üblichen Zwischenlagen aus beispielsweise Graphitfolie können den vorgenannten Effekt reduzieren jedoch nicht verhindern.

Zudem hat sich herausgestellt, dass beim Ablösen des Bauteils (Objektes) häufig Anhaftungen auf der Koppelstelle zurückbleiben, die sich gegebenenfalls anhäufen und überlagern können und so wiederum die wirkliche Kontaktfläche zu einem weiteren Testobjekt nachteilig reduzieren.

Unter atmosphärischen Bedingungen entsteht der Wärmeübergang durch die direkte Berührung (Körperkontakt) mit einem anderen Bauteil oder mit den Luftmolekülen (Konvektion) und durch Strahlung. Dieses Prinzip findet üblicherweise im Bereich bis etwa 800 - 1000 °C statt. Anwendungen, die höhere Temperaturen benötigen, werden in der Regel unter Vakuum durchgeführt, um Werkstoffbeeinflussungen wie Oxidationen und damit Strukturänderungen oder letztendlich eine Verbrennung zu vermeiden. In diesem Fall entfällt allerdings mangels freier Luftmoleküle die Konvektion. Während sich der Wärmetransport im Körperkontakt näherungsweise linear verhält, steigt die Verlustleistung durch Strahlung mit der vierten Potenz der absoluten Temperatur. Damit gewinnt eine ausgewogene Ausgestaltung der Oberflächen und ein geregelter Wärmeübergang zunehmend an Bedeutung.

Zwei Szenarien, die üblicherweise bei den Testversuchen auftreten, sind näher zu betrachten, das Heizen und das Kühlen eines betreffenden Objektes.

Soll ein Objekt aufgeheizt werden, sollte idealerweise die gesamte Wärmeleistung einer benachbart angeordneten Heizung durch eine möglichst gute Kontaktierung primär in das Objekt fließen. Dies wird umso wichtiger, je höher die angestrebte Temperatur für das Objekt ist. Das bedingt allerdings auch, dass der Wärmefluss der Heizung in anderen Richtungen, d. h. beispielsweise in Richtung einer Halterung, oder in Richtung eines Kühlers möglichst gering ausfallen sollte.

Umgekehrt verhält es sich, wenn ein Objekt gekühlt werden soll. Dann wäre eine möglichst große Fläche des Objektes von Vorteil, die durch Kontaktierung einen entsprechenden Wärmeentzug mittels Kühler herbeiführen kann.

Um eine vorgegebene Objekttemperatur unabhängig von Fremdeinflüssen konstant zu halten, ist somit ein Wechselspiel bzw. eine Mischung dieser beiden Szenarien zu bewerkstelligen. Folglich spielt die Ankopplung des Objektes an die Heizung und an die Halterung bzw. den Kühler eine entscheidende Rolle.

Ein permanent guter Flächenkontakt des Objektes an die Heizung hat den Vorteil eines guten Wärmeeintrages bei der Notwendigkeit einer Erwärmung des Objektes. In diesem Falle ist eine möglichst große thermische Entkopplung des Kühlers von Vorteil. Der Kühler selbst sollte zu seinem eigenen Schutz nicht abgeschaltet werden und bei der für den eingesetzten Werkstoff zulässigen maximalen Temperatur gehalten werden. Je geringer diese allerdings ist, umso größer wird selbstverständlich die entstehende Wärmesenke sein.

Im Falle der Notwendigkeit einer Kühlung ist die Heizung in der Regel abgeschaltet (und stellt dennoch möglicherweise durch ihren Aufbau und/oder durch ihren Werkstoff einen gegenüber dem umgebenden Bauteilwerkstoff einen ungünstigeren Wärmeleiter dar). Die thermische Ankopplung an das Objekt und dessen Halterung sollte maximal sein, um den notwendigen Wärmeentzug aus dem Objekt trotz nachteiliger (parasitärer) Randerscheinungen (Heizung, Klemmung) sicherzustellen.

Der am Rand angeordnete Klemmmechanismus, der die Anpressung für die Bauteilkopplung mit variablem Wärmeübergang erzeugt, stellt einen guten Körperkontakt zum Objekt dar. Während sich diese Einrichtung im Heizfall nachteilig als Wärmesenke auswirkt, entsteht vorteilig zusätzlich eine Kühlung auf der dem Kühler gegenüberliegenden Seite des Objektes.

Beim Aufheizen von Objekten ist immer auch der Wärmeverlust an die Umgebung zu berücksichtigen. Unter atmosphärischen Bedingungen spielt die Kühlung durch Konvektion eine entscheidende Rolle, während im Vakuum der Wärmeverlust in der Regel durch die Wärme- oder Infrarotstrahlung entsteht, da in diesem Fall systembedingt keine oder nur wenige Moleküle für den Wärmetransport zur Verfügung stehen. Der Wärmeübergang erfolgt quasi nur durch Strahlung oder direkten Flächenkontakt. Bei hohen Temperaturen wächst die Abstrahlung mit der vierten Potenz der absoluten Temperatur.

Daher wäre einerseits ein gezielter und steuerbarer Wärmeübergang zur Stabilisierung einer gewünschten Temperatur in einem Bauteil wünschenswert, zum anderen ist ein Schutz der unmittelbar benachbart angeordneten Bauteile zu bedenken. Eine Maximierung des Wärmeüberganges ist für eine Verringerung der Übertragungsverluste in der Energieeintrags- oder Energieentzugskette erstrebenswert. Andererseits könnte auch eine gezielte thermische Isolierung gegenüber der Halterung oder Einfassung von Vorteil sein.

### Aufgabe und Lösung

Die Aufgabe der Erfindung ist es, eine Vorrichtung zur Temperierung bereit zu stellen, mit der gezielt und steuerbar ein Wärmeübergang zur Stabilisierung einer gewünschten Temperatur in einem Bauteil erzielt werden kann. Dabei können die Bauteiltemperaturen bis 1500 °C betragen. Die Vorrichtung zur Temperierung sollte vorteilhaft auch im Vakuum einsetzbar sein und die bislang aus dem Stand der Technik bekannten Nachteile vermeiden.

Ferner ist es die Aufgabe der Erfindung, ein Verfahren zur gezielten und steuerbaren Wärmeübertragung von oder auf ein Bauteil mit Hilfe der vorgenannten Vorrichtung zu offenbaren.

Die Aufgaben der Erfindung werden gelöst durch eine Bauteilkopplung mit den Merkmalen des Hauptanspruchs, sowie durch ein Verfahren der gezielten und steuerbaren Wärmeübertragung von oder auf ein Bauteil über die vorgenannte Bauteilkopplung gemäß Nebenanspruch. Vorteilhafte Ausgestaltungen der Bauteilkopplung und des Verfahrens finden sich in den jeweils darauf rückbezogenen Unteransprüchen.

### Gegenstand der Erfindung

Die vorliegende Erfindung offenbart eine Vorrichtung zur Temperierung, mit der gezielt und steuerbar eine Wärmübertragung von oder auf ein Bauteil bewerkstelligt werden kann, so dass dieses Bauteil einerseits auf Temperaturen bis 1500 °C aufgeheizt oder auch wieder auf Raumtemperatur abgekühlt werden kann, andererseits aber auch reproduzierbar auf einer konstanten Temperatur zwischen Raumtemperatur und 1500 °C gehalten werden kann.

Dabei wird von einem Bauteil ausgegangen, welches einerseits durch eine interne Heizung und/oder eine äußere Wärmezufuhr bis auf Temperaturen bis 1500 °C aufgeheizt werden kann, und andererseits benachbart zu einem Kühler angeordnet ist, so dass das Bauteil nach einem Aufheizvorgang auch wieder bis auf Raumtemperatur abgekühlt werden kann.

Bei dem Bauteil kann es sich beispielsweise um eine Werkstoffprobe handeln, die im Rahmen einer Untersuchung zu Plasma-Wand-Wechselwirkung (PWW) bei Fusionsreaktoren hinsichtlich ihres Verhaltens bei der Belastung durch ein Plasma untersucht bzw. analysiert werden soll. Die Analyse erfolgt in der Regel bei einer frei wählbaren, aber konstanten Temperatur, mit oder ohne Plasmabeaufschlagung. Zu Test- und Analysezwecken ist häufig ein Wechsel von solchen Werkstoffproben erforderlich. Daher ist in der Regel eine entsprechende Aufnahme für solche Werkstoffproben vorgesehen, die häufig auch bereits eine interne Heizung aufweist.

In einer besonderen Ausgestaltung der Erfindung ist daher insbesondere eine solche Aufnahme für Werkstoffproben als Bauteil zu verstehen, die optional auch noch eine interne Heizung beinhalten kann.

Zur Verbesserung eines definierten Wärmetransportes zwischen dem Bauteil und dem Kühler ist erfindungsgemäß eine Bauteilkopplung vorgesehen.

Die erfindungsgemäße Bauteilkopplung umfasst eine Trägerplatte, über die ein Wärmeübergang zu dem Bauteil hin oder von dem Bauteil weg erfolgen kann. Die Trägerplatte weist in der Regel zwei planare Oberflächen auf und umfasst, sofern hohe Bauteiltemperaturen angestrebt werden, typischerweise einen hochwarmfesten Werkstoff keramischer oder metallischer Art. Als geeignete Keramik könnte dichtes Siliziumcarbid (SiC), beispielsweise ein drucklos gesintertes SiC (SSiC) oder ein rekristallisiertes SiC (RSiC) eingesetzt werden. Als geeignete Metalle für die Trägerplatte kommen insbesondere Molybdän, TZM oder Wolfram in Betracht.
Vorteilhaft kann als Werkstoff TZM gewählt werden, da Keramiken in der Regel eher eine thermische Isolierung darstellen und so den Wärmefluss zum angekoppelten Kühler vermindern würden. Unter TZM wird ein mit Titan-Zirkonium-Karbid mikrolegiertes Molybdän verstanden, welches die folgende Zusammensetzung aufweist: 0,4 - 0,55 Gew.-% Ti, 0,06 - 0,12 Gew.-% Zr, 0,01 - 0,04 Gew.-% C, Rest Mo). Weiterhin sind bei der Fertigung des Bauteils die gegenüber Keramik eher zähen Eigenschaften von Metallen von Vorteil.

Die Trägerplatte ist dafür vorgesehen, auf dem Kühler angeordnet zu werden und weist dazu eine entsprechende Oberflächengeometrie auf. Im einfachsten Fall könnte die planare Trägerplatte direkt auf dem Kühler angeordnet werden, so dass ein möglichst großer Körperkonkakt gegeben ist. Die ideale Ankopplung könnte erreicht werden durch Hartlöten der beiden Bauteile, durch Reibschweißen oder durch Hippen, einem heißisostatischen Pressen (HIP).

Bei angedachten hohen Temperaturen bis 1500 °C kann die Trägerplatte üblicherweise nicht selbst ein Teil des Kühlers sein, da Wasserkühler in der Regel aufgrund der guten Wärmeleitung aus Kupfer bestehen. Die Schmelztemperatur von Kuper beträgt je nach Legierung 1070 bis 1085 °C, und liegt damit weit unter der typischen Einsatztemperatur der erfindungsgemäßen Bauteilkopplung. Für Anwendungen bei deutlich niedrigeren Temperaturen kann ein Fachmann aber auch auf alternative Materialien für die Trägerplatte zugrückgreifen.

Bei der vorliegenden Erfindung wird aus den vorgenannten Gründen der bislang übliche direkte, flächige Kontakt zwischen dem aufzuheizenden, bzw. abzukühlenden Bauteil und dem Kühler gezielt unterbunden. Vielmehr ist erfindungsgemäß konstruktiv zwischen dem Bauteil und dem benachbart angeordneten Kühler, bzw. der Trägerplatte wenigstens ein definierter Hohlraum mit einer Höhe von wenigen Millimetern vorgesehen.

Dazu weist die Trägerplatte der erfindungsgemäßen Bauteilkopplung wenigstens ein Mittel zur Beabstandung eines Bauteils zur Trägerplatte auf, welches auf der Trägerplatte angeordnet ist. Dieses Mittel zur Beabstandung umfasst wenigstens ein erhabenes mehr oder weniger konzentrisches Dichtelement. Ein solches geeignetes Dichtelement könnte beispielweise eine umlaufende, in sich geschlossene Sicke oder eine O-Ringdichtung sein. Nachfolgend wird unter der Größe des Dichtmittels diejenige Fläche verstanden, die sie auf der Trägerplatte einschließt, während die Höhe des Dichtelements den Abstand zwischen der Trägerplatte und einem auf dem Dichtelement aufliegenden Bauteil an der Stelle des Dichtelements angibt.

Durch das Auflegen und Fixieren eines Bauteils auf der Baueilkopplung, insbesondere auf dem Mittel zur Beabstandung, wird erfindungsgemäß ein definierter abgedichteter Hohlraum erzeugt.

Vorteilhaft ist die Größe des Dichtelements (Fläche) so ausgelegt, dass ein möglichst großer Bereich des Bauteils und insbesondere eine beispielsweise darin angeordnete Werkstoffprobe komplett innerhalb dieser Fläche angeordnet ist.

Da beabsichtigt ist, den Hohlraum entweder mit einem fluiden Kontaktmedium zu fluten, durchströmen zu lassen oder aber auch ein Vakuum anzulegen, muss der Hohlraum vollständig abdichtbar sein. Bekanntermaßen ist es von Vorteil für eine Abdichtung, wenn die Kontaktfläche zwischen dem zu temperierenden Bauteil und dem Mittel zur Beabstandung möglichst gering ausfällt. Insbesondere ist es von Vorteil, wenn die Kontaktfläche im Idealfall nur jeweils zu einer Kontaktlinie reduziert werden kann, was insbesondere dann der Fall ist, wenn das Mittel zur Beabstandung in Richtung des Bauteils spitz zuläuft.

Im Rahmen der Erfindung wird in einer vorteilhaft einfachen Ausführungsform als Dichtelement eine umlaufende einseitige Schneide mit dreieckähnlichem Querschnitt vorgeschlagen, welche auf der Trägerplatte angeordnet ist.

Zudem kann in einer ebenfalls einfachen Ausführung der Erfindung eine konzentrische Anordnung des Dichtelements auf der Trägerplatte gewählt werden.

Das Dichtelement kann prinzipiell unterschiedliche Verlaufskonturen auf der Trägerplatte aufweisen. Bei der Auswahl einer geeigneten Geometrie, die das Dichtelement auf der Trägerplatte ausbildet, sind jedoch einerseits die Herstellungsbedingungen zu berücksichtigen und anderseits auch die Sicherstellung der Dichtheit, die nur durch eine gleichmäßige Anpressung des Bauteils auf das wenigstens ein Dichtelement zu bewerkstelligen ist.

Vorteilhaft werden die Trägerplatte und das Mittel zur Beabstandung fertigungstechnisch aus einem Material gefertigt.

Zwecks guter Dichteigenschaften sollte das Dichtelement vorzugsweise aus einem harten und gleichzeitig zähen Werkstoff bestehen, um eine saubere Oberkante des Elementes sicherzustellen. Die planare Gegenseite - in der Regel die Unterseite des Bauteils - sollte eher eine weichere Oberfläche aufweisen, um ein gewisses Anschmiegen an das Dichtelement zu erreichen.

Bei der Anforderung eines wiederholten Wechsels des Bauteils gegenüber der ortsfesten Kühlerbaugruppe, kann es sinnvoll sein, das auswechselbare Objekt (Bauteil) im Bereich der Kontaktfläche mit dem Mittel zur Beabstandung mit der weicheren Planfläche auszustatten. Im Bedarfsfall, bei Beschädigung oder Verschleiß durch nicht tolerierbare Einpressungen, kann so die Fläche leicht ausgetauscht werden, während das Dichtelement unverändert bestehen bleibt.

Eine besondere Ausführungsform der erfindungsgemäßen Bauteilkopplung sieht daher eine zusätzliche, gegebenenfalls austauschbare dünne Dichtplatte, bzw. eine Dichtscheibe vor, die zwischen dem Bauteil und dem Mittel zur Beabstandung angeordnet ist, und die direkten Kontakt zum Bauteil aufweist oder aber über ein weiteres Mittel zur Beabstandung angeordnet werden kann.

Denkbar wäre auch anstelle einer planaren Fläche des Bauteils eine passgenaue Negativkontur zum Dichtelement wie beispielsweise bei einer Labyrinthdichtung. Dabei ist jedoch die Frage nach der Aufwand-Nutzen-Relation zu berücksichtigen, zumal empfindliche Konturen an einem mobilen Objekt generell gefährdet sind.

Als Material für das Mittel zur Beabstandung und insbesondere für das Dichtelement bietet sich insbesondere dasselbe Material, welches bereits die Trägerplatte umfasst. Das Material muss im Einsatzbereich (beispielsweise bis 1500 °C) temperaturstabil sein. Sofern fluide Medien eingesetzt werden sollen, darf das Dichtmaterial ebenso wie die Trägerplatte zudem nicht durch die fluiden Medien angreifbar sein.

Bei den vorgenannten Temperaturen bis zu 1500 °C kann das sonst üblicherweise als Dichtung eingesetzte Kupfer nicht zur Anwendung als erfindungsgemäßes Mittel zur Beabstandung kommen. Als Ersatz bietet sich beispielsweise für das Dichtelement der Werkstoff TZM (Titan-Zirkon-Molybdän) an, während für die Gegenseite Tantal eingesetzt werden könnte. Aus Fertigungs- und schließlich auch aus Dichtheitsgründen werden das Dichtelement und die Trägerplatte in der Regel vorteilhaft als ein Bauteil ausgestaltet sein.

Zur Herstellung eines guten Wärmeüberganges kann der erfindungsgemäß gebildete Hohlraum mit beliebigen Medien, d. h. flüssigen oder gasförmigen Stoffen, geflutet bzw. durchflossen werden. Sofern das Bauteil über das Mittel zur Beabstandung fest auf der Trägerplatte fixiert ist, beispielsweise über eine Klemmvorrichtung, kann der Hohlraum auch mit einem leichten Überdruck beaufschlagt werden.
Alternativ kann der Hohlraum auch zwecks Erzielung einer thermischen Isolierung evakuiert werden.

Sofern im Rahmen der Erfindung von einer Evakuierung bzw. von einem Vakuum gesprochen wird, soll darunter ein Druck von mehr als 10⁻⁵ mbar verstanden werden, insbesondere ein Druck zwischen 10⁻⁴ und 10⁻⁵ mbar.

Auch in diesem Fall sollte das Mittel zur Beabstandung vorteilhaft eine möglichst große Fläche einnehmen, um die Fläche zur Isolierung gegenüber dem Bauteil ebenfalls möglichst groß zu gestalten. Sofern in dem Bauteil eine Werkstoffprobe angeordnet ist, sollte die Isolationsfläche vorteilhaft auch größer sein, als die auf die Bauteiloberfläche projizierte Fläche der Werkstoffprobe.
Um den Hohlraum mit einem Medium zu fluten, bzw. eine Vakuum anzulegen, ist vorgesehen, dass in der Trägerplatte innerhalb der Dichtungsfläche wenigstens eine Öffnung, bzw. Zuführung für ein Medium, sowie mindestens eine Öffnung, bzw. Abführung für ein Medium angeordnet ist. Damit ist eine Durchströmung des Hohlraumes mit dem gewählten Medium möglich.
Die vorgenannten Öffnungen, bzw. Leitungen können vorteilhaft jeweils mit einem Ventil versehen werden, so dass der Durchfluss eines Mediums, bzw. das Absaugen zur Erzielung eines Vakuums gesteuert werden kann. Die Leitungen selbst können an Vorratsgefäße mit entsprechenden Kontaktmedien oder einer Vakuumpumpe angeschlossen sein.
Da in der Regel ein flächiger Kontakt von der Trägerplatte zu dem benachbart angeordneten Kühler vorgesehen ist, können die Leitungen in einer vorteilhaften Ausgestaltung der Erfindung seitlich aus der Trägerplatte herausgeführt werden.
Bei einem einmaligen Befüllen des Hohlraumes mit einem Medium würde bei einer Trennung der Aufnahme von dem Mittel zur Beabstandung die Umgebung durch das Austreten des Mediums nachteilig beeinträchtigt werden. Auch vor diesem Hintergrund wird daher vorgeschlagen, vor einem Wechsel des Objektes das fluide Medium aus dem Hohlraum durch Spülen oder Anlegen eines Vakuums über eine angepasste Absaugmöglichkeit zu entfernen. Zur Verbesserung der Durchströmung oder der Absaugung des Hohlraums sieht eine besondere Ausgestaltung der Erfindung vor, neben wenigstens einer ersten Zu- bzw. Abfuhrleitung, wenigstens eine weitere Zu- bzw. Abfuhrleitung vorzusehen. Auch diese weiteren Leitungen können vorteilhaft mit einem Ventil versehen sein und direkt an die Trägerplatte angrenzen, bzw. in ihrem Inneren verlaufen.
Beispielsweise könnte eine Zu- bzw. Abführung im Zentrum des Mittel zur Beabstandung angeordnet und wenigstens eine oder mehrere Ab- bzw. Zuführungen konzentrisch in unmittelbarer Nähe zum Mittel zur Beabstandung vorgesehen sein, so das eine radiale Strömung eines fluiden Mediums vom Zentrum des Hohlraums zu den Rändern oder auch umgekehrt realisiert werden kann.

Bei entsprechender Druckstaffelung im Zu- und Abfluss könnte das verwendete Medium zwecks stärkerer Wärmeaufnahme sogar von der Flüssigkeits- in die Gasphase wechseln, seinen Aggregatzustand ändern.

In einer besonderen Ausgestaltung der Erfindung ist vorgesehen, anstelle einer reinen Durchströmung des Hohlraums mit einem Kontaktmedium bei mehr oder weniger konstantem Druck, nunmehr eine Druckdifferenz zwischen Zu- und Abführung derart einzustellen, dass ein zunächst zugeführtes flüssiges Medium während des Durchströmens des Hohlraums durch die Wärmeaufnahme seinen Aggregatzustand zumindest teilweise bzw. lokal ändern kann. Durch einen Wechsel von einer Flüssigkeitsphase zu einer Gasphase könnte bevorzugt eine größere Wärmemenge vom Kontaktmedium aufgenommen werden. In diesem Fall ist eine entsprechende Druckeinrichtung bzw. Überwachung und Regelung in den Zu- bzw. Abführungsleitungen vorgesehen.

Durch die Zuführung eines geeigneten fluiden Kontaktmediums in bzw. durch den erfindungsgemäßen Hohlraum kann ein deutlich besserer und homogener Wärmeübergang von und zu dem sichergestellt werden. Als geeignete fluide Kontaktmedien, die bei Betriebstemperatur als Gase und/oder Flüssigkeiten vorliegen, können beispielsweise Helium, Argon oder Wasser genannt werden. Generell ist zu beachten, dass sich die hier eingesetzten Medien rückstandsfrei ausspülen lassen müssen, da anderenfalls bei der mechanischen Öffnung der Kopplung das Vakuum verunreinigt würde. Vor diesem Hintergrund wird zum Beispiel der Einsatz von Ölen schwer handhabbar sein. Zudem sollte das fluide Kontaktmedium selbst nicht aggressiv gegenüber den Materialien der beteiligten Bauteile sein.

Da bei der hier vorgestellten Bauteilkopplung in der Regel nur geringe Drücke und kleine Flächen, und keine äußeren Kräfte vorliegen, ist eine mechanische Verformung des Bauteils durch die eingestellten Unter- oder Überdrücke nicht zu erwarten. Vielmehr ergibt sich durch den erfindungsgemäß geschaffenen Hohlraum vorteilig ein geometrisches Puffervolumen, das eine thermisch bedingte Verformung des Bauteils vorteilhaft auffangen kann.

So könnten bei einem zentral im Bauteil angeordneten Heizer und einer am Außenrand des Bauteils angeordneten und zwangsläufig kühleren Halterung gegebenenfalls in der Mitte des Bauteils Spannungen entstehen, die eine Auswölbung hervorrufen könnten. Bei dem klassischen Körperkontakt zu einer benachbart angeordneten Fläche würde dadurch möglicherweise ein großflächiges Abheben mit undefinierten Zuständen entstehen, während bei der vorliegenden Erfindung vorteilhaft lediglich eine vernachlässigbare Reduzierung des Hohlraumes erfolgen würde.

Um eventuelle Undichtigkeiten in dem Mittel zur Beabstandung abzufangen, ist in einer weiteren vorteilhaften Ausgestaltung der Erfindung vorgesehen, ein weiteres Mittel zur Beabstandung auf der Trägerplatte vorgesehen, welches um das erste Mittel zur Beabstandung angeordnet ist. Zwischen dem ersten und dem zweiten Mittel zur Beabstandung wird zusammen mit der Trägerplatte und einem auf beiden Dichtungselementen fixiertes Bauteil somit ein weiterer Hohlraum geschaffen.

Zudem ist wenigstens eine weitere Ab- bzw. Zuführung in der Trägerplatte vorgesehen, die zwischen den beiden Mittel zur Beabstandung angeordnet ist und gegebenenfalls aus dem ersten Hohlraum übertretendes fluides Kontaktmedium abführen kann.

Unabhängig von der Funktion als Sicherheitszone für den ersten Hohlraum zu dienen, kann der weitere Hohlraum aber natürlich auch, sofern wenigstens eine Zu- und Abführungsleitung oder Öffnung dafür vorgesehen sind, unabhängig vom ersten Hohlraum mit einem Kontaktmedium geflutet bzw. durchströmt werden oder aber auch ein Vakuum angelegt werden.

Zusammenfassend lässt sich die Erfindung dadurch beschreiben, dass sie eine Bauteilkopplung mit variablem Wärmeübergang offenbart. Die Anwendung ist von Vorteil bei der Forderung einer frei wählbaren und in Folge konstanten Temperatur eines ein- oder aufgespannten Bauteils, ggfs. mit einer eingebetteten Werkstoffprobe, unabhängig vom Gesamtaufbau und dem thermischen Energieeintrag in das Bauteil. Ein weiterer Vorzug dieser Erfindung ist die Erzeugung von reproduzierbaren Eigenschaften der Kontaktfläche, wenn ein wiederholter Wechsel eines der zu kontaktierenden Bauteile (Objekte) stattfinden soll.

Durch die spezielle Anordnung können vorteilhaft nicht nur Bauteile mit einer planaren Oberfläche wie bislang, sondern vorteilhaft auch mit einer komplexeren 3-D Oberfläche eingesetzt werden, solange durch das Bauteil und das Mittel zur Beabstandung zwischen Bauteil und Trägerplatte ein abgeschlossener Hohlraum erzeugt werden kann.

Erfindungsgemäß wird ein flächiger Bauteilkontakt gezielt unterbunden, indem konstruktiv ein abgedichteter Hohlraum zwischen den zu koppelnden Bauteilen, d. h. dem Bauteil auf der einen Seite und einem Kühler(baugruppe) auf der anderen Seite geschaffen wird.

Durch die näherungsweise kontaktfreie Ankopplung des Bauteils entsteht die Möglichkeit einer gezielten Steuerung des Wärmeüberganges durch die Wahl entsprechender, den Hohlraum füllender Kontaktmedien.

Zwecks thermischer Isolierung kann in einer speziellen Ausgestaltung dieser Raum evakuiert werden. Als thermische Kopplung steht in diesem Fall nur Strahlung zur Verfügung.
Für einen guten Wärmeübergang kann in einer weiteren speziellen Ausgestaltung der Zwischenraum mit einem flüssigen oder gasförmigen Kontaktmedium geflutet oder durchströmt werden, so dass sich näherungsweise ein ganzflächiger Bauteilkontakt einstellt.

Sollte eine hohe Kühlleistung notwendig sein, wäre vorteilhaft auch ein Wärmeentzug durch Verdampfung (Aggregatszustandsänderung) eines durchströmenden flüssigen Kontaktmediums realisierbar.

Eine tabellarische Übersicht der unterschiedlichen Verfahrensführungen mit einer erfindungsgemäßen Bauteilkopplung findet sich im speziellen Beschreibungsteil.

### Spezieller Beschreibungsteil

Nachfolgend wird der Gegenstand der Erfindung anhand von Ausführungsbeispielen und Figuren näher verdeutlicht. Es zeigen
- Figur 1:: Schematische Schnittzeichnung einer ersten Ausgestaltung der erfindungsgemäßen Bauteilkopplung in Kontakt mit einem Bauteil sowie einem Kühler.
- Figur 2:: Schematische Schnittzeichnung einer weiteren Ausgestaltung der erfindungsgemäßen Bauteilkopplung mit einer Zuführungsleitung für ein fluides Medium.
- Figur 3:: Schematische Schnittzeichnung einer dritten Ausgestaltung der erfindungsgemäßen Bauteilkopplung mit einem weiteren Mittel zur Beabstandung und einer weiteren Zu- bzw. Abführungsleitung für ein fluides Medium.
- Figur 4:: Schnittzeichnung einer Targethalterung mit einer erfindungsgemäßen Bauteilkopplung.
- Figur 5:: Ausschnitts-Vergrößerung der erfindungsgemäßen Bauteilkopplung aus Figur 4.

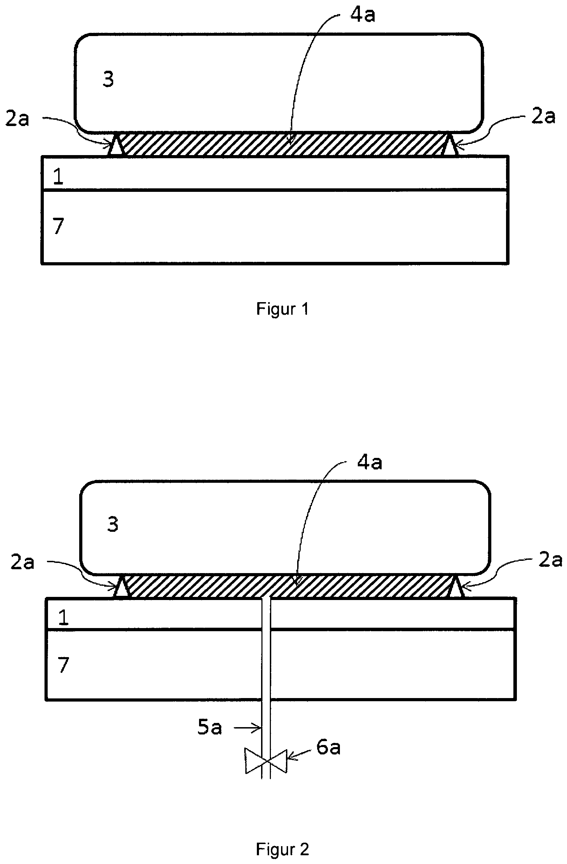

In den Figuren 1 bis 3 bedeuten jeweils:
- 1: Trägerplatte als Teil der erfindungsgemäßen Bauteilkopplung.
- 2a: erstes Dichtelement als Teil der erfindungsgemäßen Bauteilkopplung.
- 2b: optionales, weiteres Dichtelement.
- 3: aufzuheizendes bzw. abzukühlendes Bauteil, gegebenenfalls mit interner Heizung.
- 4a: definierter Hohlraum.
- 4b: optionaler weiterer, definierter Hohlraum.
- 5a: erste Zuleitung und/ der Absaugmöglichkeit für ein Kontaktmedium.
- 5b: weitere Zuleitung und/oder Absaugmöglichkeit für ein Kontaktmedium.
- 6a: Ventil für eine erste Zu- oder Ableitung.
- 6b: Ventil für eine weitere Zu- oder Ableitung.
- 7: Kühler.

Die Figur 1 zeigt schematisch eine Anordnung mit einer erfindungsgemäßen Bauteilkopplung, insbesondere die Koppelstelle, an der das aufzuheizende Bauteil in Kontakt mit der Bauteilkopplung steht. Zwischen dem Bauteil 3 und der Koppelstelle in Form einer Trägerplatte 1 und eines Mittels zur Beabstandung 2a wird ein Hohlraum 4a durch ein erhabenes konzentrisches Dichtelement 2a, welches auf der Trägerplatte 1 angeordnet ist, erzeugt. Die Trägerplatte 1 weist einen direkten flächigen Kontakt zu einem Kühler 7 auf.

Durch eine hier nicht eingezeichnete Klemmvorrichtung kann das Bauteil 3 gegen das Dichtelement 2a mit entsprechend geeigneter Oberfläche gepresst werden, wobei sich ein definierter abgedichteter Zwischenraum Hohlraum 4a ergibt. Das Dichtelement 2a ist hier als einseitige Schneide mit dreieckähnlichem Querschnitt ausgebildet. Alternativ ist auch eine andere Geometrie, wie beispielsweise eine Labyrinthdichtung, denkbar.

Ein schlichtes Befüllen des Hohlraumes über einen Zulauf 5a würde bei einer Trennung der Verbindung die Umgebung durch das Austreten des Mediums beeinflussen. Vor diesem Hintergrund sollte entsprechend der Figur 2 eine angepasste Absaugmöglichkeit 5a für den Hohlraum 4a innerhalb der Trägerplatte 1 vorgesehen werden, die vorteilhaft über ein Ventil 6a steuerbar ausgestaltet ist.

Sofern wenigstens eine Zu- und eine Abführung vorgesehen sind, ist vorteilhaft auch eine Durchströmung des Zwischenraumes mit dem gewählten Kontaktmedium möglich.

Bei entsprechender Druckstaffelung im Zu- und Abfluss könnte in einer besonders vorteilhaften Ausgestaltung der Erfindung das verwendete Kontaktmedium zwecks stärkerer Wärmeaufnahme sogar von der Flüssigkeits- in die Gasphase wechseln, seinen Aggregatzustand ändern.

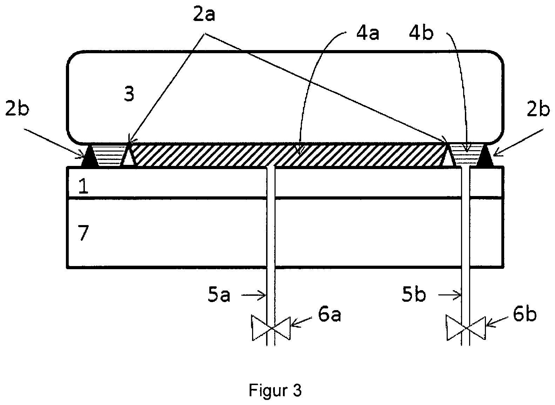

Um eventuelle Undichtigkeiten der ersten Dichtung 2a abzufangen, ist in einer weiteren Ausgestaltung der Erfindung, siehe Figur 3, vorteilhaft ein weiteres, das erste Dichtungselement 2a einschließende Dichtungselement 2b angeordnet und zwischen den beiden Dichtungselementen 2a, 2b eine weitere Zu- bzw. Abführungsleitung 5b mit weiteren Absauganschlüssen innerhalb der Trägerplatte 1 vorgesehen.

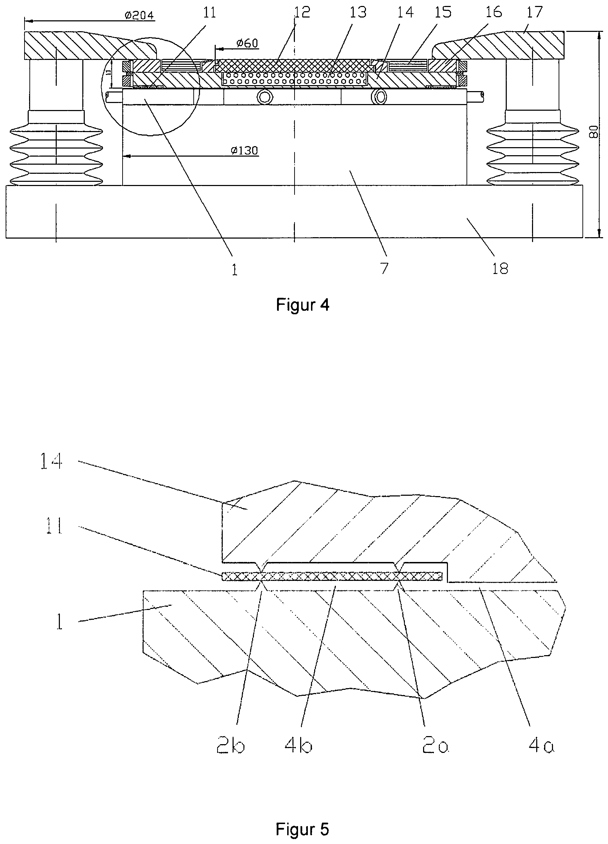

Die Figuren 4 und 5 zeigen Schnittzeichnungen einer konkreten Ausführungsform der erfindungsgemäßen Bauteilkopplung in einer Targethalterung, wobei die Figur 5 eine Vergrößerung des in Figur 4 dargestellten Kreises darstellt.

Die Probe 12 ist mittels einer Maske in dem Halter 14 fixiert. Nach außen schließt sich ein Strahlungsschirm 15 an, um Streustrahlung zu reflektieren. Unmittelbar unter der Probe ist ein Heizer 13 angeordnet. Der Kragen 16 bildet das Gegenlager für den Anpressring 17, der über eine Schnecke und einen Stellmotor verstellt, den Halter mit Probe gegen die Trägerplatte 1 der Bauteilkopplung presst. Am Außenumfang sind zwei Kontaktringe für den Heizer mit der zwischenliegenden Isolierung dargestellt. Die Trägerplatte1 ist aufgesetzt auf einen Wasserkühler 7. Der gesamte Aufbau ist montiert auf einer Grundplatte 18. Je nach Umgebungsbedingungen wie geforderte Temperatur, Bauteilsteifigkeit oder Gewicht kann der Halter 14 aus unterschiedlichen Materialien bestehen und so ein ganzes Bauteil gemäß 3 darstellen. Bedingt durch vorliegende Anforderungen ist der Einsatz verschiedener Werkstoffe notwendig und führt zu einer Auftrennung in die Bauelemente 11, 14.

In der Vergrößerung (Figur 5) ist der Einsatz einer zusätzlichen separaten Dichtscheibe 11 erkennbar. In dieser Ausgestaltung weisen sowohl die Trägerplatte 1 als auch der Halter 14 Mittel zur Beabstandung 2a, 2b auf. Die Dichtscheibe 11 weist zudem hier nicht eingezeichnete Öffnungen auf. Der Hohlraum zwischen Trägerplatte und Dichtscheibe 11 ist mit dem Hohlraum zwischen der Dichtscheibe 11 und dem Halter 14 verbunden, und kann somit mit nur einer weiteren Zu- bzw. Abführungsleitung verbunden sein.

Die nachfolgende Tabelle gibt einen Überblick, welche Wirkung der Einsatz eines fluiden Medium, bzw. eines Vakuums innerhalb des definierten Hohlraums der Bauteilkopplung auf die Wärmeübertagung von und auf das Bauteil (Probe) haben.

| Zieltemperatur für das Bauteil | externe Heizung | interne Heizung | Strahlungsverlust | Bauteilkopplung Hohlraum wird | Kühlerdurchfluss |
|---|---|---|---|---|---|
| Erwärmung | ein | aus / ein | ja | evakuiert | konstant |
| Erwärmung | aus | ein | ja | evakuiert | konstant |
| Konstanz | ein | aus | ja | Füllung oder Durchsatz (z.B. Argon) | konstant |
| Konstanz | aus | ein | ja | Füllung oder Durchsatz (z.B. Argon) | konstant |
| Abkühlung | ein | aus | ja | Füllung oder Durchsatz (z.B. He/H₂O) | konstant oder höherer |
| Raumtemperatur | ein | aus | ja | Füllung oder Durchsatz mit Verdampfung (z.B. He/H₂O) | hoch |

## Patentansprüche

1. Bauteilkopplung zur gezielten und steuerbaren Wärmeübertragung von oder auf ein Bauteil (3),
**dadurch gekennzeichnet,**
- **dass** die Bauteilkopplung eine Trägerplatte (1) umfasst und
- **dass** auf der Trägerplatte (1) wenigstens ein erstes Mittel zur Beabstandung (2a) derart angeordnet ist, dass ein auf dem Mittel zur Beabstandung angeordnetes Bauteil (3) und die Trägerplatte (1) zusammen mit dem Mittel zur Beabstandung (2a) einen ersten definierten Hohlraum (4a) auszubilden vermögen, wobei die Trägerplatte und das Mittel zur Beabstandung jeweils einen keramischen oder metallischen Werkstoff umfasst und die Trägerplatte im inneren Bereich des ersten Mittels zur Beabstandung (2a) wenigstens eine Zu- bzw. Abführung (5a) für ein fluides Medium für den ersten Hohlraum (4a) aufweist.

2. Bauteilkopplung nach Anspruch 1,
bei dem das erste Mittel zur Beabstandung (2a) eine umlaufende Sicke oder eine O-Ringdichtung ist.

3. Bauteilkopplung nach einem der vorigen Ansprüche,
bei dem das erste Mittel zur Beabstandung (2a) eine spitz zulaufende Oberfläche in Form einer einseitigen Schneide mit dreieckigem Querschnitt aufweist.

4. Bauteilkopplung nach einem der vorigen Ansprüche,
mit einer Trägerplatte umfassend SiC, einen Titan-Zirkon-Molybdän Werkstoff oder Wolfram.

5. Bauteilkopplung nach einem der vorigen Ansprüche,
mit einem Mittel zur Beabstandung umfassend SiC, einen Titan-Zirkon-Molybdän Werkstoff oder Wolfram.

6. Bauteilkopplung nach einem der vorigen Ansprüche,
bei dem die Trägerplatte (1) ein weiteres Mittel zur Beabstandung (2b) aufweist, welches mit einem darauf angeordneten Bauteil (3) und der Trägerplatte (1) sowie dem ersten Mittel zur Beabstandung (2a) einen weiteren definierten Hohlraum (4b) auszubilden vermag.

7. Bauteilkopplung nach Anspruch 6,
bei dem das weitere Mittel zur Beabstandung (2b) eine spitz zulaufende Oberfläche in Form einer einseitigen Schneide mit dreieckigem Querschnitt aufweist.

8. Bauteilkopplung nach einem der Ansprüche 6 bis 7,
bei dem die Trägerplatte (1) im inneren Bereich des weiteren Mittels zur Beabstandung (2b) aber außerhalb des Bereichs des ersten Mittels zur Beabstandung (2a) wenigstens eine weitere Zu- bzw. Abführung (5b) für ein fluides Medium für den weiteren Hohlraum (4b) aufweist.

9. Bauteilkopplung nach einem der vorigen Ansprüche, bei dem das Mittel zur Beabstandung (2a, 2b) eine Höhe von mehr als 1 mm aber weniger als 10 mm aufweist, insbesondere eine Höhe von weniger als 5 mm.

10. Verfahren zum Betreiben einer Bauteilkopplung nach einem der Ansprüche 1 bis 9, bei dem ein Bauteil (3) derart auf die Trägerplatte (1) und das erste Mittel zum Beabstandung (2a) angeordnet wird, dass das Bauteil (3) und die Trägerplatte (1) zusammen mit dem Mittel zur Beabstandung einen definierten Hohlraum (4a) ausbilden, mit den Schritten
- der Hohlraum (4a) wird über wenigstens eine Zu- bzw. Abführung (5a) für ein fluides Medium evakuiert oder
- der Hohlraum (4a) wird über wenigstens eine Zu- bzw. Abführung (5a) mit einem fluiden Medium gefüllt, oder
- der Hohlraum (4a) wird über wenigstens eine Zuführung und wenigstens eine Abführung (5a) von einem fluiden Medium durchströmt.

11. Verfahren zum Betreiben einer Bauteilkopplung nach einem der Ansprüche 6 bis 9, bei dem der weitere definierte Hohlraum (4b) über wenigstens eine weitere Zu- bzw. Abführung (5b) für ein fluides Medium evakuiert wird.

## Claims

1. Component coupling for targeted and controllable heat transfer from or to a component (3),
**characterised in that**
- the component coupling comprises a carrier plate (1) and
- at least a first means of distancing (2a) is arranged on the carrier plate (1) in such a way that a component (3) arranged on the means of distancing and the carrier plate (1) together with the means of distancing (2a) may form a first defined cavity (4a), in which the carrier plate and the means of distancing comprise a ceramic or metallic material and the carrier plate has at least one inlet or outlet (5a) for a fluid medium for the first cavity (4a) in the inner area of the first means of distancing (2a).

2. Component coupling according to claim 1,
in which the first means of distancing (2a) is a circumferential bead or O-ring seal.

3. Component coupling according to one of the previous claims,
in which the first means of distancing (2a) has a tapering surface in the form of a one-sided cutting edge with a triangular cross section.

4. Component coupling according to one of the previous claims,
with a carrier plate comprising SiC, a titanium-zirconium-molybdenum material or tungsten.

5. Component coupling according to one of the previous claims,
with a means of distancing comprising SiC, a titanium-zirconium-molybdenum material or tungsten.

6. Component coupling according to one of the previous claims,
in which the carrier plate (1) has further means of distancing (2b), which with a component (3) arranged on it and the carrier plate (1) as well as the first mean of distancing (2a) may form a further defined cavity (4b).

7. Component coupling according to claim 6,
in which the further means of distancing (2b) has a tapering surface in the form of a one-sided cutting edge with a triangular cross section.

8. Component coupling according to one of claims 6 to 7,
in which the carrier plate (1) has at least a further inlet or outlet (5b) for a fluid medium for the further cavity (4b) in the inner area of the further means of distancing (2b) but outside the area of the first means of distancing (2a).

9. Component coupling according to one of the previous claims, in which the means of distancing (2a, 2b) has a height of more than 1 mm but less than 10 mm, particularly a height of less than 5 mm.

10. Method for operating a component coupling according to one of claims 1 to 9, in which a component (3) is arranged on the carrier plate (1) and the first means of distancing (2a) in such a way that the component (3) and the carrier plate (1) together with the means of distancing form a defined cavity (4a), with the steps
- the cavity (4a) is evacuated through at least one inlet or outlet (5a) for a fluid medium or
- the cavity (4a) is filled with a fluid medium through at least one inlet or outlet (5a) or
- a fluid medium flows through the cavity (4a) through at least one inlet and at least one outlet (5a).

11. Method for operating a component coupling according to one of claims 6 to 9, in which the further defined cavity (4b) is evacuated through at least a further inlet or outlet (5b) for a fluid medium.

## Revendications

1. Couplage de pièce pour transmettre de la chaleur de manière ciblée et pouvant être commandée d'une pièce (3) ou à la pièce (3),
**caractérisé**
- **en ce que** le couplage de pièce comprend une plaque (1) de support et
- **en ce que** sur la plaque (1) de support est disposé au moins un premier moyen de mise à distance (2a), de manière à ce qu'une pièce (3) disposée sur le moyen de mise à distance et la plaque (2) de support puissent ensemble avec le moyen de mise à distance (2a) constituer une première cavité (4a) définie, la plaque de support et le moyen de mise à distance comprenant chacun un intérieur céramique ou métallique et la plaque de support ayant dans la partie intérieure du premier moyen de mise à distance (2a), au moins une entrée ou une sortie (5a) d'un milieu fluide pour la première cavité (4a).

2. Couplage de pièce suivant la revendication 1,
dans lequel le premier moyen de mise à distance (2a) est une nervure ou un joint torique faisant le tour.

3. Couplage de pièce suivant l'une des revendications précédentes,
dans lequel le premier moyen de mise à distance (2a) a une surface se terminant en pointe sous la forme d'une arête d'un côté de section transversale triangulaire.

4. Couplage de pièce suivant l'une des revendications précédentes,
ayant une plaque de support comprenant du SIC, un matériau titane-zirconium-molybdène ou du tungstène.

5. Couplage de pièce suivant l'une des revendications précédentes,
ayant un moyen de mise à distance comprenant du SIC, un matériau titane-zirconium-molybdène ou du tungstène.

6. Couplage de pièce suivant l'une des revendications précédentes,
dans lequel la plaque (1) de support a un autre moyen de mise à distance (2b), qui permet, avec une pièce (3) disposée dessus et la plaque (1) de support ainsi que le premier moyen de mise à distance (2a), de constituer une autre cavité (4b) définie.

7. Couplage de pièce suivant la revendication 6,
dans lequel l'autre moyen de mise à distance (2b) a une surface se terminant en pointe sous la forme d'une arête d'un côté de section transversale triangulaire.

8. Couplage de pièce suivant l'une des revendications 6 à 7, dans lequel la plaque (1) de support a dans la partie-intérieure de l'autre moyen de mise à distance (2b), mais à l'extérieur de la partie du premier moyen de mise à distance (2a), au moins une autre entrée et sortie (5b) d'un milieu fluide pour l'autre cavité (4b).

9. Couplage de pièce suivant l'une des revendications précédentes, dans lequel le moyen de mise à distance (2a, 2b) a une hauteur de plus de 1 mm mais de moins de 10 mm, notamment une hauteur de moins de 5 mm.

10. Procédé pour faire fonctionner un couplage de pièce suivant l'une des revendications 1 à 9, dans lequel on met une pièce (3) sur la plaque (1) de support et le premier moyen de mise à distance (2a), de manière à ce que la pièce (3) et la plaque (1) de support constituent ensemble avec le moyen de mise à distance une cavité (4a) définie, comprenant les stades
- on fait le vide dans la cavité (4a) par au moins une entrée ou une sortie (5a) d'un milieu fluide ou
- on remplit la cavité (4a) par au moins une entrée ou une sortie (5a) d'un milieu fluide ou
- on fait passer dans la cavité (4a) un milieu fluide par au moins une entrée et au moins une sortie (5a).

11. Procédé pour faire fonctionner un couplage de pièce suivant l'une des revendications 6 à 9, dans lequel on fait le vide dans l'autre cavité (4b) définie par au moins une autre entrée ou sortie (5b) d'un milieu fluide.
